# EUROPÄISCHE PATENTSCHRIFT

(11) **EP 2 767 825 B1**
(45) Veröffentlichungstag und Bekanntmachung des Hinweises auf die Patenterteilung: **28.06.2017**
(21) Anmeldenummer: 13000814.7
(22) Anmeldetag: 18.02.2013
(51) Int. Cl.: G01N 27/02, D06F 39/00, D06F 33/02

(54) **Verfahren und Vorrichtung zur Bestimmung einer Mizellbildungskonzentration**
Method and device for determining a micelle formation concentration
Procédé et dispositif destinés à la détermination d'une concentration de formation de micelles

(43) Veröffentlichungstag der Anmeldung: 20.08.2014
(73) Patentinhaber: Seuffer GmbH & Co. KG, 75365 Calw-Hirsau (DE)
(72) Erfinder: Gruden, Roman, Dr., 75365 Calw (DE); Tran, Dana, 72202 Nagold (DE); Köbele, Wolfgang, 72202 Nagold (DE); Klein, Uwe, Prof. Dr., 72218 Wildberg (DE)
(74) Vertreter: Winter, Brandl, Fürniss, Hübner, Röss, Kaiser, Polte - Partnerschaft mbB

(56) Entgegenhaltungen:
- DD-A1- 217 557
- CHANG HONG-CHI ET AL: "Measurement of critical micelle concentration of nonionic surfactant solutions using impedance spectroscopy technique", REVIEW OF SCIENTIFIC INSTRUMENTS, AIP, MELVILLE, NY, US, Bd. 69, Nr. 6, 1. Juni 1998 (1998-06-01), Seiten 2514-2520, XP012036644, ISSN: 0034-6748, DOI: 10.1063/1.1148951
- HELINANDO P. DE OLIVEIRA ET AL: "Use of Electrical Impedance Spectroscopy as a Practical Method of Investigating the Formation of Aggregates in Aqueous Solutions of Dyes and Surfactants", THE JOURNAL OF PHYSICAL CHEMISTRY B, Bd. 115, Nr. 21, 2. Juni 2011 (2011-06-02) , Seiten 6903-6908, XP055067294, ISSN: 1520-6106, DOI: 10.1021/jp200644y

## Beschreibung

Die vorliegende Erfindung betrifft ein Verfahren und eine zugehörige Vorrichtung zur Bestimmung einer Mizellbildungskonzentration in einem wässrigen Medium, und insbesondere ein Verfahren und eine Vorrichtung zur Bestimmung einer kritischen Mizellbildungskonzentration in einer Waschlauge.
In privaten Hauhalten und in industriellen Anwendungen besteht im Allgemeinen ein immer stärker werdender Informationsbedarf hinsichtlich der Eigenschaften von Waschlaugen und im Allgemeinen von wässrigen Lösungen mit Reinigungsmitteln zur Durchführung bestimmter Reinigungsmaßnahmen. Hierbei erfolgen die Reinigungsmaßnahmen in Verbindung mit fluiden Medien, wie beispielsweise einer Waschlauge einer Waschmaschine. Die Erfassung von Eigenschaften des jeweiligen fluiden Mediums (der Reinigungsflüssigkeit) ist erforderlich zur Bestimmung grundlegender Eigenschaften bei dem Einsatz dieser Medien, wobei entsprechend der gewonnenen Information in Form von Messwerten bestimmter Parameter und den daraus bei der Auswertung gewonnenen Erkenntnissen bestimmt werden kann, ob das fluide Medium in seinem derzeitigen Zustand noch vorbestimmte Anforderungen hinsichtlich einer effektiven Reinigung erfüllt und ob die Konzentration von Wasch- oder Reinigungsmitteln ausreichend ist.

Neben dem Aspekt einer wirksamen Reinigung stehen zunehmend Aspekte einer wirtschaftlichen Durchführung der Reinigung sowie Umweltschutzaspekte im Vordergrund. Dies betrifft die verwendete Wassermenge im Falle der fluiden bzw. wässrigen Medien, die erforderliche Menge an Reinigungsmitteln sowie die Dauer der Reinigung insbesondere im Hinblick auf den Einsatz elektrischer Energie.

Moderne Waschgeräte (Waschmaschinen, Wascheinrichtungen, im weiteren Sinne auch Geschirrspüler) weisen bereits werkseitig entsprechende Reinigungsprogramme mit Spareffekten bezüglich eines verminderten Energie- und Waschmittelverbrauchs auf. Im Hinblick auf Untersuchungen am Beispiel einer Waschlauge werden nachstehend bekannte Verfahren und Vorrichtungen genannt.

Die Druckschrift DD 217 557 A1 offenbart ein Verfahren und eine zugehörige Vorrichtung zur Regelung der Reinigungs- oder Spülmittelzugabe in Waschgeräten, wobei in dem Waschgerät zur physikalisch-chemischen Bestimmung der Waschlauge unterschiedliche Sensoren angeordnet sind. Einer der mehreren Sensoren kann beispielsweise auf eine Tensidkonzentration ansprechen. Über eine der Auswertung der Ausgangssignale dienende elektronische Schaltung wird im Allgemeinen eine Änderung der Ausgangssignale und insbesondere ein Anstieg der Ausgangssignale (Messsignale) während der Zugabe von Reinigungs- oder Spülmitteln erfasst. In Verbindung mit tensidhaltigen Waschlaugen können beispielsweise die Oberflächenspannung, die elektrische Leitfähigkeit und dergleichen als eine charakteristische Änderung von Ausgangssignalen der Sensoren in Abhängigkeit von der Tensidkonzentration dienen. In Verbindung mit einer entsprechenden Auswertung kann hieraus eine Waschmitteldosierung für das entsprechende Wasch- oder Reinigungsgerät eingestellt oder gesteuert werden.

Die Druckschrift DE 197 55 418 A1 offenbart ein Sensorelement sowie eine Vorrichtung zur Messung komplexer Impedanzen in Materialien, wobei das Sensorelement zwei Elektroden aufweist, die aus einem leitfähigen Material bestehen und die in einem vorbestimmten Abstand zueinander angeordnet sind. Die beiden Elektroden sind mit einer dünnen Isolierschicht überzogen, die eine im Vergleich zu dem vorbestimmten Abstand geringe Schichtdicke aufweist. Das gebildete Sensorelement ist gegenüber Störungen weitgehend unempfindlich. In einer Auswertschaltung werden die Ausgangssignale der Sensoren einer weiteren Verarbeitung unterzogen, und es kann bei dieser Verarbeitung eine Analyse der Eigenschaften der jeweils zwischen den Elektroden angeordneten Flüssigkeit durchgeführt werden. Hierbei können insbesondere komplexe Impedanzen als Maß für die Eigenschaften der Flüssigkeiten bestimmt und ausgewertet werden.

Mit der zunehmenden Betrachtung der Wasch- und Reinigungsvorgänge sowie der verwendeten Waschmittel unter Umweltschutzgesichtspunkten ist es erforderlich, sowohl eine Wassermenge, als auch eine Waschmittelmenge in Abhängigkeit beispielsweise von dem Verschmutzungsgrad eines Waschguts oder den in Frischwasser gelösten Stoffen zu dosieren. Eine gezielte und richtige Dosierung entsprechender Waschmittel führt einerseits zu einer Einsparung an Energie und Wasser, sowie andererseits auch zu einer erstrebten geringeren Belastung des Abwassers.

Im Allgemeinen enthalten Waschmittel zur Bildung einer Waschlauge zur Reinigung von Textilien Tenside als oberflächenaktive Substanzen, wobei die Oberflächenspannung des Wassers in der gebildeten wässrigen Lösung (Waschlauge) herabgesetzt wird, da die Tenside sich bevorzugt an der Oberfläche und damit an einer Grenzfläche anlagern. Insbesondere lagern sich Tenside ab einer bestimmten Konzentration in der Waschlauge in Form von Mizellen an, da diese energetisch günstig sind. Es entspricht diese Konzentration der kritischen Mizellbildungskonzentration (cmc, critical micell concentration, englisch für kritische Mizellbildungskonzentration).

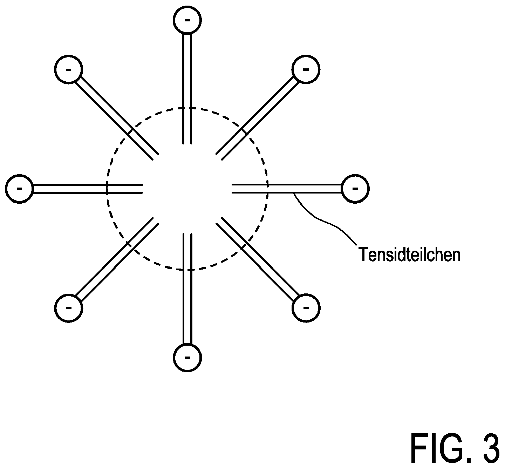

In Fig. 3 ist in vereinfachter und schematischer Weise eine derartige Mizelle dargestellt, die sich in Abhängigkeit von der Art des Tensids in den Waschlaugen (Tensidlösungen) bei geringerer Konzentration an der Wasseroberfläche und bei zunehmender Konzentration auch in der Waschlauge anlagern, wenn die Grenzfläche in Form der Wasseroberfläche nahezu vollständig mit den Mizellen ausgefüllt ist. Die Mizellen als Verbände (Aggregation) in unterschiedlicher Form von mehreren 100 bis 1000 Tensidanionen zeigen somit auch im Inneren der Lösung eine entsprechende Wechselwirkung mit dem Wasser der Waschlauge.

Mittels entsprechender Verfahren kann die kritische Mizellbildungskonzentration durch Messung der Oberflächenspannung in Abhängigkeit von der Tensidkonzentration durchgeführt werden. Im Einzelnen wird eine Federwaage mit einer Platte verbunden, die in die zu untersuchende Flüssigkeit getaucht wird. An der Grenzfläche zwischen der Flüssigkeit und der umgebenden Luft wird eine Oberflächenspannung ausgebildet (Meniskus). Durch entsprechende Kräftemessung kann die Oberflächenspannung eines zu erfassenden Mediums, beispielsweise von Wasser oder einer Waschlauge, ermittelt werden (Wilhelmy-Waage)

Ferner kann die Oberflächenspannung auch mit einem Blasentensiometer bestimmt werden, wobei jedoch die Erfassung der Oberflächenspannung mit den beiden vorstehend angegebenen Verfahren vergleichsweise aufwendig ist und im Wesentlichen nur in einem Labor eingesetzt werden kann. Mit diesem Verfahren können grundlegende Messungen durchgeführt werden, wobei jedoch eine rasche und einfache Erfassung der Parameter eines fluiden Mediums, wie beispielsweise einer Waschlauge, während eines Prozesses in industrieller Anwendung und in Haushalten nicht einfach durchgeführt werden kann.

Wird die Erfassung der elektrischen Leitfähigkeit zur Bestimmung eines funktionellen Zusammenhangs von Messsignalen (Messgrößen) der Tensidkonzentration betrachtet, ist im Wesentlichen eine indirekte Bestimmung dieser Information durch die elektrische Leitfähigkeit erforderlich. Hierzu müssen zwei Messreihen durchgeführt werden. Eine erste Messreihe erfasst eine Information in Verbindung mit einer niedrigen zu einer hohen Konzentration, und eine zweite Messreihe erfasst die Information in Verbindung mit einer hohen zu einer niedrigen Konzentration. Insbesondere ist die zweite Messreihe bei industriellen Wascheinrichtungen und auch in privaten Haushalten nicht möglich.

Es ist erkennbar, dass bei den vorstehend beschriebenen bekannten Verfahren teilweise ein erhöhter Aufwand erforderlich ist und die Anwendung während laufender Prozesse in einer industriellen Anwendung oder beispielsweise bei einem Waschvorgang in privaten Haushalten und insbesondere eine Automatisierung nicht sinnvoll bzw. nicht möglich ist.

Der vorliegenden Erfindung liegt daher die Aufgabe zugrunde, ein Verfahren und eine Vorrichtung zur Bestimmung einer Mizellbildungskonzentration in einem wässrigen Medium derart auszugestalten, dass auf einfache und kostengünstige Weise innerhalb eines laufenden Prozesses eine beliebige Erfassung der Mizellbildungskonzentration gewährleistet ist.

Erfindungsgemäß wird diese Aufgabe gelöst durch ein Verfahren und eine Vorrichtung zur Bestimmung einer Mizellbildungskonzentration gemäß den Merkmalen der beigefügten Patentansprüche.

Das erfindungsgemäße Verfahren zur Bestimmung einer Mizellbildungskonzentration kann beispielsweise in einer Wascheinrichtung durchgeführt werden, wobei die Wascheinrichtung eine zur Durchführung eines Waschvorgangs erforderliche Wassermenge aufweist. Das Verfahren umfasst die Schritte: - Zuführen einer Teilmenge eines Waschmittels zu der Wassermenge zur Bildung einer Waschlauge (Schritt 1), - Erfassen eines Betrags und eines Phasenwinkels einer Impedanz der Waschlauge für eine vorbestimmte Anzahl von Frequenzen von Ansteuerungssignalen und Erzeugen einer entsprechenden Anzahl jeweiliger Messwerte (Schritt 2), - Ermitteln einer Steigung aus jedem Messwert des Phasenwinkels und der jeweiligen Frequenz (Schritt 3), - Berechnen eines jeweiligen Mittelwerts aus der Anzahl der Steigungen und den Beträgen der Impedanz (Schritt 4), - Ermitteln eines Bestimmungsprodukts (MBP) aus dem Mittelwert der Steigungen und dem Mittelwert der Beträge der Impedanzen (Schritt 5B), - Vergleichen des Bestimmungsprodukts (MBP) mit einem vorbestimmten Schwellenwert (Schritt 6B), und - Wiederholen der Schritte 1 bis 6B, bis das Bestimmungsprodukt (MBP) gleich oder größer als der Schwellenwert ist (Schritt 7).

Alternativ wird ein Bestimmungsquotient (MBQ) aus dem Mittelwert der Steigungen und dem Mittelwert der Beträge der Impedanzen (Schritt 5A) ermittelt und es wird der Bestimmungsquotient (MBQ) mit einem vorbestimmten Schwellenwert (Schritt 6A) verglichen.

Die Vorrichtung zur Durchführung des Verfahrens weist die erforderlichen Einrichtungen gemäß Patentanspruch 8 auf.

Mit dem vorstehend beschriebenen Verfahren und der zur Durchführung des Verfahrens vorgesehenen Vorrichtung besteht eine einfache und kostengünstige Möglichkeit, während eines Dosiervorgangs innerhalb eines Waschvorgangs in beispielsweise einer Wascheinrichtung oder einer Spülmaschine eine Bestimmung der Mizellbildungskonzentration (Konzentration der gebildeten Mizellen) durchzuführen, so dass die im laufenden Dosiervorgang gewonnenen Daten unmittelbar für die Steuerung oder Regelung desselben des Dosiervorgangs und damit auch des Waschvorgangs verwendet werden können. Hierbei kann die Vorrichtung in eine handelsübliche Wascheinrichtung für private Haushalte sowie auch in eine Maschine für industrielle Anwendungen eingesetzt werden, wobei während des laufenden Prozesses begleitend Daten gewonnen werden. Mittels der Daten kann eine Steuerung und/oder Regelung des Prozesses für eine optimale Reinigung und gleichzeitig einen optimalen Energieeinsatz, eine angemessene Prozessdauer und eine geringste Umweltbelastung durchgeführt werden.

Im Einzelnen kann auf zwei unterschiedliche Arten, jedoch auf einfache und kostengünstige Weise während des Prozesses (Dosiervorgang innerhalb des Waschvorgangs) und in Verbindung mit einer sich in vorbestimmter Weise ändernden Dosierung des Waschmittels die jeweilige sich ergebende veränderliche Mizellbildungskonzentration bestimmt werden. Aus Vergleichen mit grundlegenden Messungen oder mit aus grundlegenden Messungen bestimmten jeweiligen Grenzwerten oder Schwellenwerten kann eine kritische Mizellbildungskonzentration (cmc) zu einem bestimmten Zeitpunkt erkannt werden, so dass unmittelbar Steuerungs- oder Regelungsvorgänge bezüglich desselben Waschvorgangs eingeleitet werden können. Im Einzelnen werden prozessbegleitend Daten zur Steuerung oder Regelung diese Prozesses gewonnen und ausgewertet, so dass zu Beginn des Waschvorgangs der anfängliche Dosiervorgang und danach der weitere Waschvorgang im Sinne eines Einsatzes einer optimalen Waschmittelmenge beeinflusst und überwacht werden.

Mit der kostengünstig und damit in großen Stückzahlen herzustellenden Vorrichtung zur Erfassung der Mizellbildungskonzentration in einem wässrigen Medium, beispielsweise in der vorliegenden Waschlauge, besteht die Möglichkeit, auch Wascheinrichtungen (Waschgeräte, Waschmaschinen auch Geschirrspüler) für private Haushaltungen oder eine industrielle Anwendung mit einer derartigen Vorrichtung auszustatten, so dass auch bei der Vielzahl der erforderlichen Waschvorgänge Steuerungs- und Regelungsvorgänge verwirklicht werden können, entsprechend denen Ressourcen wie Frischwasser und Energie sowie Umweltaspekte durch einen geringeren Waschmittelverbrauch bei einer gleichzeitig effektiven Reinigung berücksichtigt werden können. Die erfindungsgemäße Vorrichtung ermöglicht eine kostengünstige Herstellung der erforderlichen Komponenten, so dass in weiten Bereichen in privaten Haushalten eingesetzte Wascheinrichtungen somit ohne erhebliche Kostensteigerungen und mit geringen Änderungen ausgestattet werden können.

Weitere Ausgestaltungen der vorliegenden Erfindung sind in den Unteransprüchen angegeben.

In dem Verfahren kann die Teilmenge eines Waschmittels eine vorbestimmte Grundmenge eines Waschmittels entsprechend einem jeweiligen Waschvorgang sein.

In der Wascheinrichtung kann eine Sensoreinrichtung in Kontakt mit der Waschlauge vorgesehen sein, und es können zur Durchführung der Messung gemäß Schritt 2 der Sensoreinrichtung die Ansteuerungssignale zugeführt werden.

In dem Verfahren kann der Schritt des Berechnens der jeweiligen Mittelwerte den Schritt des Berechnens der Mittelwerte für sämtliche oder zumindest einen Teil der Anzahl der Messwerte in Verbindung mit den diskreten Frequenzen umfassen.

Es können die Schwellenwerte experimentell und individuell im Zusammenhang mit einem jeweiligen Waschvorgang bestimmt werden.

In dem Verfahren können mittels der Sensoreinrichtung die Impedanz und der Phasenwinkel für die diskreten Frequenzen und in Abhängigkeit von der zugeführten Teilmenge des Waschmittels bestimmt werden.

Die vorliegende Erfindung wird nachstehend anhand von Ausführungsbeispielen unter Bezugnahme auf die Zeichnungen näher beschrieben. Es zeigen:
Fig. 1 ein Blockschaltbild der Vorrichtung zur Durchführung von Erfassungen in Verbindung mit dem erfindungsgemäßen Verfahren,
Fig. 2 eine vereinfachte schematische Darstellung der Vorrichtung gemäß Fig. 1, die beispielsweise in einem Gerät wie einer Wascheinrichtung angeordnet ist,
Fig. 3 eine vereinfachte und schematische Darstellung des Aufbaus einer Mizelle,
Fig. 4 eine Darstellung von Kennlinien des Betrags der erfassten Impedanz des fluiden Mediums in Abhängigkeit von der Frequenz und der Waschmittelkonzentration,
Fig. 5 eine graphische Darstellung der erfassten Phasenverschiebung (Phasenwinkel) in Abhängigkeit von der Waschmittelkonzentration und der Frequenz als Parameter,
Fig. 6 eine graphische Darstellung des Mizellenbestimmungsprodukts MBP in Abhängigkeit von der Waschlaugenkonzentration,
Fig. 7 eine Übersicht über die Schritte des Grundverfahrens sowie der beiden alternativen Endverfahren A und B, und
Fig. 8 eine schematische Darstellung der in der Steuerungseinrichtung gemäß Fig. 1 vorgesehenen Einrichtungen zur Durchführung des Verfahrens.

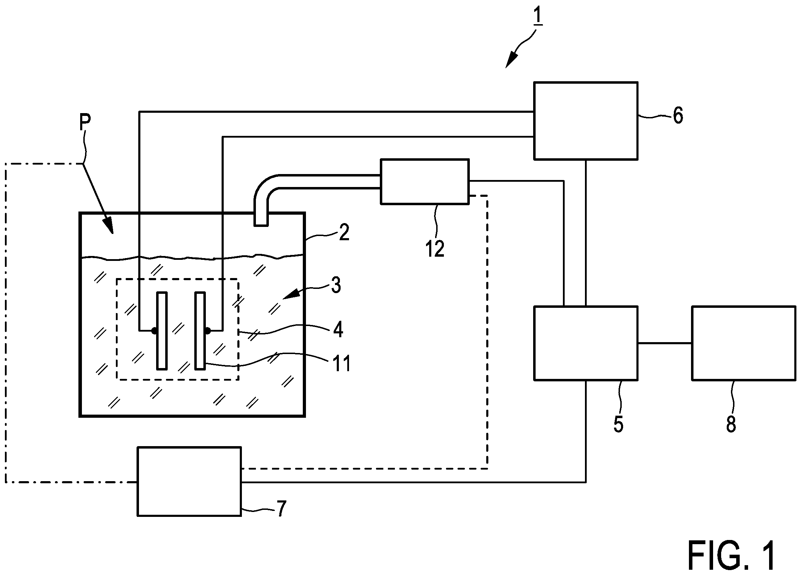

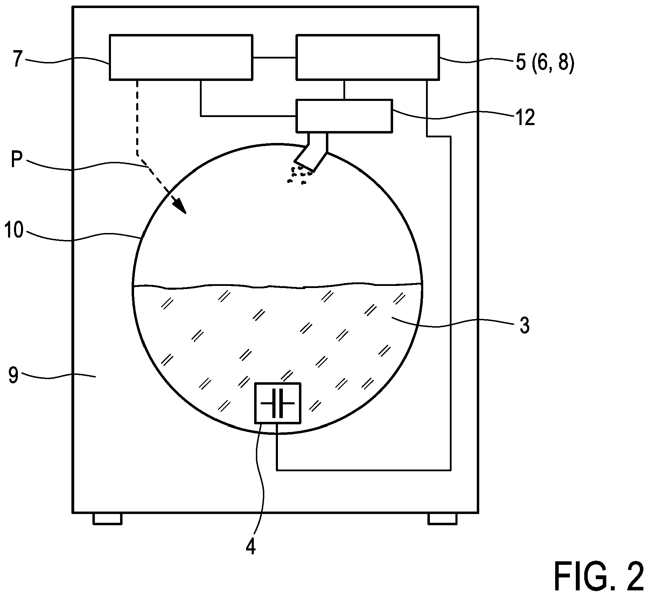

Nachstehend wird die grundlegende Anordnung der Vorrichtung gemäß der vorliegenden Erfindung in Verbindung mit dem Blockschaltbild gemäß Fig. 1 und der schematischen Darstellung einer Anordnung in einem Gerät gemäß Fig. 2 beschrieben.
Fig. 1 zeigt zur Veranschaulichung die Vorrichtung zur Bestimmung einer Mizellbildungskonzentration (nachstehend vereinfacht als "die Vorrichtung 1" bezeichnet) in einer Anwendung zur Erfassung der Eigenschaften eines in einem Behälter 2 angeordneten fluiden Mediums 3. Der Begriff des Behälters ist hier in sehr allgemeiner Form aufzufassen, wobei es sich beispielsweise um einen Tank in einer Maschine, einen Laugenbehälter einer Wascheinrichtung (Waschmaschine) oder einen beliebigen Behälter mit einem zur Reinigung dienenden Medium (Flüssigkeit) handeln kann. Die vorliegende Erfindung ist nicht auf eine dieser Behälterarten beschränkt.
Die Vorrichtung 1 umfasst eine Sensoreinrichtung 4, die zur Erfassung der Eigenschaften des fluiden Mediums 3 dient. Das fluide Medium 3 kann beispielsweise in Form einer Waschlauge vorliegen, oder auch von Frischwasser, dem in vorbestimmter Weise eine vorbestimmte Menge eines Reinigungsmittels zugeführt wird. Es können mit der Vorrichtung auch weitere Eigenschaften oder Parameter des fluiden Mediums 3, wie beispielsweise eine Wasserhärte oder Schadstoffe bestimmt werden.
Zur Durchführung entsprechender Messungen ist die Sensoreinrichtung 4 der Vorrichtung 1 in dem Behälter 2 angeordnet und wird zumindest teilweise von dem fluiden Medium 3 umströmt, so dass der Einfluss der Eigenschaften des Mediums 3 auf die Messung gewährleistet ist. Ist beispielsweise die Sensoreinrichtung 4 in Form eines Kondensators aufgebaut, so befindet sich das Medium 3 als ein Dielektrikum zwischen den in Fig. 1 schematisch dargestellten Kondensatorplatten 11 und übt einen Einfluss auf die sich ergebende Kapazität aus.
Die Vorrichtung 1 gemäß Fig. 1 umfasst ferner eine Steuerungseinrichtung 5, die einerseits zur Steuerung und/oder Regelung der gesamten Abläufe der Erfassung dient, und andererseits eine Ansteuerung der Sensoreinrichtung 4 veranlasst, sowie eine Auswertung der von der Sensoreinrichtung 4 abgegebenen Signale (Erfassungssignale) durchführt. Die Steuerungseinrichtung 5 kann eine Verbindung zu weiteren (in den Figuren nicht gezeigten) Datenverarbeitungseinrichtungen aufweisen.
Die Steuerungseinrichtung 5 ist mit einer Ansteuerungseinrichtung 6 verbunden, die ihrerseits mit der Sensoreinrichtung 4 in Verbindung steht und entsprechend innerhalb der Steuerungseinrichtung 5 erzeugter Anweisungen und Befehle die Sensoreinrichtung 4 mit jeweiligen elektrischen Signalen ansteuert. Beispielsweise werden an die Sensoreinrichtung 4 zur Durchführung entsprechender Messungen Ströme und Spannungen in Verbindung mit vorbestimmten Größen und mit vorbestimmten Frequenzen oder Frequenzbereichen angelegt. Es kann des Weiteren auch die Temperatur des Mediums 3 mittels einer (nicht gezeigten) Einrichtung erfasst werden.

In Fig. 1 sind die Steuerungseinrichtung 5 und die Ansteuerungseinrichtung 6 als getrennte Einheiten vorgesehen. Alternativ kann die Ansteuerungseinrichtung 6 auch innerhalb der Steuerungseinrichtung 5 angeordnet sein, wobei in der dann gebildeten Steuerungseinrichtung 5 die Funktionen der früheren Steuerungseinrichtung 5 und der Ansteuerungseinrichtung 6 zusammengefasst sind.

Die Steuerungseinrichtung 5 ist ferner mit einer Steuereinheit 7 verbunden, die direkt im Zusammenhang mit dem Behälter 2 steht. Wird beispielsweise angenommen, dass der Behälter 2 der Laugenbehälter einer Wascheinrichtung 9 (Waschmaschine) ist, stellt die Steuereinheit 7 die Einrichtung zur elektrischen und elektronischen Steuerung der Wascheinrichtung 9 dar. In der Wascheinrichtung 9 werden in einer entsprechend programmierten Weise Wassermengen und Waschmittelzugabe (Waschmittelzuführung) sowie Waschtemperaturen und Zeitverlauf eines Waschvorgangs sowie auch Schleuderzeiten und Schleuderdrehzahlen gesteuert. Die Steuerungseinrichtung 5 kann in Abhängigkeit von den Messergebnissen in Verbindung mit dem erfindungsgemäßen Verfahren die Steuereinheit 7 beeinflussen, so dass abweichend von einem vorbestimmten Programm oder in Ergänzung desselben eine größere oder kleinere Wasser- oder Waschmittelmenge eingesetzt oder beispielsweise auch eine Veränderung der Waschtemperatur vorgenommen werden kann. Somit kann auf der Basis der gemäß der vorliegenden Erfindung gewonnenen Information über die Eigenschaften des fluiden Mediums 3 (beispielsweise einer Waschlauge) die Steuereinheit 7 der Wascheinrichtung 9 zur Durchführung von Steuerungs- und/oder Regelungsvorgängen während eines laufenden Prozesses (eines aktuell durchgeführten Waschvorgangs einschließlich eines am Anfang des Waschvorgangs liegenden Dosiervorgangs) beeinflusst werden. Mittels eines Pfeils P ist gemäß Fig. 1 die Einflussnahme der Steuereinheit 7 auf den Waschvorgang (Dosiervorgang) schematisch angedeutet.

Die Steuerungseinrichtung 5 ist ferner verbunden mit einer Speichereinrichtung 8, in der zur Durchführung der Erfassung der Eigenschaften des Mediums entsprechende Daten und Programme zur Durchführung des erfindungsgemäßen Verfahrens gespeichert sind.

Die Steuerungseinrichtung 5 kann auf diese Daten und Programme zugreifen, und es können in der Speichereinrichtung 8 aktuell gewonnene Daten sowie ursprünglich erzeugte Kennfelder und weitere Betriebswerte zeitweilig oder dauernd gespeichert werden. Alternativ kann die Speichereinrichtung 8 auch in der Steuerungseinrichtung 5 integriert bzw. enthalten sein.

In der Darstellung von Fig. 1 ist die Vorrichtung 1 zur Erfassung der Mizellbildungskonzentration einschließlich der Sensoreinrichtung 4, der Steuerungseinrichtung 5, der Ansteuerungseinrichtung 6 und er Speichereinrichtung 8 in allgemeiner Form dargestellt. Fig. 2 zeigt demgegenüber die Anordnung der Vorrichtung 1 in der Wascheinrichtung 9. In einem Laugenbehälter 10 der Wascheinrichtung 9 befindet sich das fluide Medium 3, und vorzugsweise in einem tieferen Bereich des Waschlaugenbehälters 10 ist die Sensoreinrichtung 4 angeordnet. Sie steht mit der Steuerungseinrichtung 5, der Ansteuerungseinrichtung 6 sowie der Speichereinrichtung 8 in Verbindung. Die Steuerungseinrichtung 5 ist mit der Steuereinheit 7 der Wascheinrichtung 9 verbunden.

Befindet sich in dem Laugenbehälter 10, der dem Behälter 2 gemäß Fig. 1 entspricht, das zu erfassende fluide Medium 3, beispielsweise in Form einer Waschlauge, erfasst die Sensoreinrichtung 4 in Verbindung mit der Steuerungseinrichtung 5 verschiedene Eigenschaften und Parameter des Mediums 3, und es erfasst die vorstehend beschriebene Vorrichtung 1 vorzugsweise während des gesamten Waschvorgangs und somit speziell während der Zugabe des erforderlichen Waschmittels (Dosiervorgang) die Mizellbildungskonzentration in dem Medium 3.

Wie es aus Fig. 2 erkennbar ist, kann die Vorrichtung ohne Weiteres in eine bestehende und handelsübliche Wascheinrichtung 9 (Waschgerät, Waschmaschine) eingebaut werden, wobei lediglich die Sensoreinrichtung 4 und die Steuerungseinrichtung 5 (einschließlich der Ansteuerungseinrichtung 6 und der Speichereinrichtung 8 berücksichtigt werden müssen. Neben der Anwendung bei Waschgeräten wie der Wascheinrichtung 9 besteht auch die Möglichkeit, die erfindungsgemäße Anordnung sowie das zugehörige Verfahren bei jeder Art fluider Medien 3 anzuwenden. Der Aufbau und die Wirkungsweise der vorliegenden Erfindung werden anhand einer Wascheinrichtung beschrieben.

Die Wascheinrichtung 9 gemäß Fig. 2 weist eine zur Durchführung des Waschvorgangs erforderliche Menge an Frischwasser auf. Bei der Durchführung eines Waschvorgangs wird im Allgemeinen der angemessenen Frischwassermenge während oder nach dem Einlaufen in die Wascheinrichtung 9 mittels eines gesteuerten Dosiervorgangs Waschmittel in vorbestimmter Menge zugeführt. Es entsteht damit die eingangs genannte und das Medium 3 darstellende Waschlauge als Lösung von Tensiden mit in Abhängigkeit vom Dosiervorgang unterschiedlicher Konzentration. Während des Waschvorgangs und schon beim Dosiervorgang als dem anfänglichen Teil des Waschvorgangs bilden sich durch Aggregation der Tenside Mizellen, deren Konzentration mittels der erfindungsgemäßen Vorrichtung und dem zugehörigen Verfahren kontinuierlich oder zyklisch in kurzen (vorbestimmten) Zeitabständen mittels der Vorrichtung 1 bestimmt wird. Der Waschvorgang und insbesondere der Dosiervorgang kann aufgrund des Erfassungsergebnisses der Vorrichtung 1 in der Wascheinrichtung 9 gesteuert oder geregelt werden. Hierbei steht die Erfassung der Mizellbildungskonzentration in Verbindung mit der entsprechend dosierten Zugabe von Waschmittel.

Zur Veranschaulichung der eingangs beschriebenen Wirkung der in Waschmitteln enthaltenen Tenside als oberflächenaktive Substanzen zeigt Fig. 3 in vereinfachter und schematischer Darstellung den Aufbau einer Mizelle. Die zweidimensional dargestellte Anordnung der Mizelle gemäß Fig. 3 ist dreidimensional und wird auch als Kugel-Mizelle bezeichnet. Ferner können sich die Tenside des Waschmittels um Schmutzpartikel anlagern, die vom Waschgut abgelöst wurden. In Abhängigkeit von der Art des Waschmittels und den jeweiligen Waschtensiden lagern sich diese nebeneinander und um die Schmutzpartikel an (Aggregation).

Mizellen bilden sich ab einer bestimmten Konzentration des Waschmittels im Wasser (Waschlauge) und sind ebenfalls in Abhängigkeit von der Art des Tensids elektrisch gemäß der Darstellung in Fig. 3 polarisiert (Neigung der Tenside zur Phasentrennung). Entsprechend der entstandenen Konzentration lagern sich derartige Mizellen im Wesentlichen an der Wasseroberfläche (Grenzfläche) an.

Die Vorrichtung 1 zur Erfassung der Mizellbildungskonzentration und insbesondere einer kritischen Mizellbildungskonzentration wurde vorstehend in Verbindung mit den Figuren 1 und 2 beschrieben. Die Sensoreinrichtung 4, die mit dem zu erfassenden Medium 3 und im vorliegenden Beispiel mit der Waschlauge in Verbindung steht bzw. von dieser umströmt wird, bildet eine elektrochemische Zelle, die beispielsweise mittels Kondensatorplatten 11 gemäß Fig. 1 aufgebaut sein kann. Hierbei hat die elektrochemische Zelle in Form der Sensoreinrichtung 4 einen flüssigen Elektrolyten (das Medium 3), der zwischen den Kondensatorplatten 11 angeordnet ist und gleichzeitig auch eine gewisse elektrische Leitfähigkeit aufweist, die abhängig ist von der Beschaffenheit des Elektrolyten, der hier in Form der Waschlauge bzw. des Mediums 3 vorliegt. Die elektrische Leitfähigkeit wird beeinflusst durch beispielsweise die Wasserhärte und die in das Wasser eingebrachte Menge an Waschmitteln (Waschmittel- oder Tensidkonzentration).

Bei der elektrochemischen Zelle mit dem flüssigen Elektrolyten liegen in elektrischer Hinsicht bei einer Ansteuerung mit Spannungs- und Stromsignalen mit vorbestimmten Frequenzen (Wechselsignale) ein kapazitiver und ein induktiver Blindwiderstandsanteil vor. Bei niedrigen Konzentrationen eines Waschmittels im Wasser überwiegt der kapazitive Anteil, während bei höheren Konzentrationen des Waschmittels der induktive Anteil überwiegt. Die Erfassung der Mizellen und somit der zu größeren Molekülen angelagerten Tenside (Aggregation) beruht auf der Änderung der Eigenschaften des flüssigen Elektrolyten in Form des Mediums 3 (beispielsweise der Waschlauge), wobei diese Veränderung erfasst werden kann. Weitere Einflussfaktoren bei der Bestimmung der Mizellbildungskonzentration besteht in der Art des Waschmittels (und damit seiner Zusammensetzung), der Verschmutzung eines Waschguts hinsichtlich der Art und Intensität sowie der Qualität des verwendeten Frischwassers (Gesamthärte, Carbonathärte, Ca-/Mg-Verhältnis).

Nachstehend wird das Verfahren zur Erfassung einer Mizellbildungskonzentration gemäß der vorliegenden Erfindung beschrieben. Das Verfahren umfasst einen ersten Teil mit bestimmten Schritten der Vorgehensweise in Verbindung mit einem gesteuerten bzw. geregelten Dosiervorgang, sowie darauf aufbauend zwei spezielle und zueinander alternative Teile der weiteren Vorgehensweise mit den entsprechenden Schritten. Der erste Teil des Verfahrens mit vier Schritten stellt ein Grund- oder Basisverfahren dar während darauf aufbauende Verfahrensteile ein jeweiliges Endverfahren bezeichnen. Das vorstehend angegebene Verfahren betrifft speziell die Erfassung der Mizellbildungskonzentration während des Dosiervorgangs, so dass nach dem Erkennen der kritischen Mizellbildungskonzentration der Dosiervorgang beendet werden kann, da dann die optimale Waschmittelmenge zugeführt wurde und der restliche Teil des Waschvorgangs fortgesetzt werden kann. Die Vorrichtung 1 kann ungeachtet des beendeten Dosiervorgangs nach der Erfassung der kritischen Mizellbildungskonzentration weitere Messungen zur Überwachung oder zusätzlichen Steuerung oder Regelung des restlichen Waschvorgangs durchführen, die jedoch nicht zu einer weiteren Waschmittelzugabe sondern lediglich zu prozessbegleitenden Daten führen, beispielsweise betreffend Waschdauer, Waschtemperatur, Wassermenge und Zeitpunkt der Einleitung und Anzahl der Spülvorgänge. Diese Messungen können nach einem weiteren hier nicht dargestellten Verfahren durchgeführt werden.

Wie es vorstehend angegeben ist, wird die vorliegende Erfindung am Beispiel einer Waschlauge als Medium 3 beschrieben, die in einer Wascheinrichtung 9 und dem zugehörigen Laugenbehälter 10 (entsprechend dem Behälter 2 gemäß Fig.1) angeordnet ist. Die Sensoreinrichtung 4 wird von dem Medium 3 in Form der Waschlauge zumindest teilweise umströmt, so dass eine verlässliche Messung durchgeführt werden kann. Zur Durchführung der Messung, die programmgesteuert ablaufen kann, werden in der Steuerungseinrichtung 5 im Rahmen der Anwendung der Impedanzspektroskopie entsprechende Anweisungen erzeugt, die in Verbindung mit der Ansteuerungseinrichtung 6 als Strom- oder Spannungssignale mit vorbestimmten Frequenzen oder Frequenzbereichen an die Sensoreinrichtung 4 angelegt werden. Jeweils sich ergebende Ausgangssignale werden durch die Steuerungseinrichtung 5 direkt oder über die Ansteuerungseinrichtung 4 aufgenommen und verarbeitet. Die Verarbeitung umfasst vielfältige Arten von Berechnungen, Vergleichen von Speichervorgängen der unmittelbaren Messwerte sowie der verarbeiteten Information. Auf diese Information kann zu weiteren Zwecken, auch beispielsweise der Darstellung auf einem Monitor, zugegriffen werden.

Dem Laugenbehälter 10 der Wascheinrichtung 9 gemäß Fig. 2 wird als Ausgangspunkt Frischwasser zugeführt und es wird danach in einem ersten Schritt in Verbindung mit dem Dosiervorgang eine kleine Waschmittelmenge eingebracht. Der Dosiervorgang stellt den anfänglichen Teil des gesamten Waschvorgangs dar und betrifft die in Verbindung mit der vorliegenden Erfindung gesteuerte oder geregelte Zuführung des Waschmittels, aufgeteilt in kleine Einzelmengen. Die kleine Waschmittelmenge stellt eine erheblich kleinere Menge des Waschmittels als diejenige dar, die für den vollständigen Waschvorgang erforderlich ist und als Gesamtmenge während des Dosiervorgangs eingebracht wird. Es wird somit nicht zu Beginn des Verfahrens die vollständige Waschmittelmenge in das Frischwasser eingebracht, sondern lediglich eine erste vorbestimmte Teilmenge in Form einer vorbestimmten Grundmenge zur Einleitung des Waschvorgangs und zur Durchführung erster Messvorgänge. Beispielsweise kann die voraussichtliche gesamte (geschätzte) Waschmittelmenge in 4 bis 20 Teilmengen aufgeteilt werden, und es wird zu Beginn des Waschvorgangs in dem ersten Schritt die erste Teilmenge (die erste vorbestimmte Waschmittelmenge, d. h. die erste Grundmenge) und damit die erste vorbestimmte Menge an Tensiden entsprechend der Art und Zusammensetzung des Waschmittels in das Frischwasser zur Bildung der Waschlauge eingebracht. Es kann bei jedem nachstehend noch beschriebenen Zuführen einer weiteren Teilmenge an Waschmittel jedes Mal die vorbestimmte Grundmenge zugeführt werden, oder es kann die weitere zuzuführende Teilmenge in Abhängigkeit von der bereits seit Beginn des Dosiervorgangs zugeführten kumulierten Waschmittelmenge von der Grundmenge abweichen.

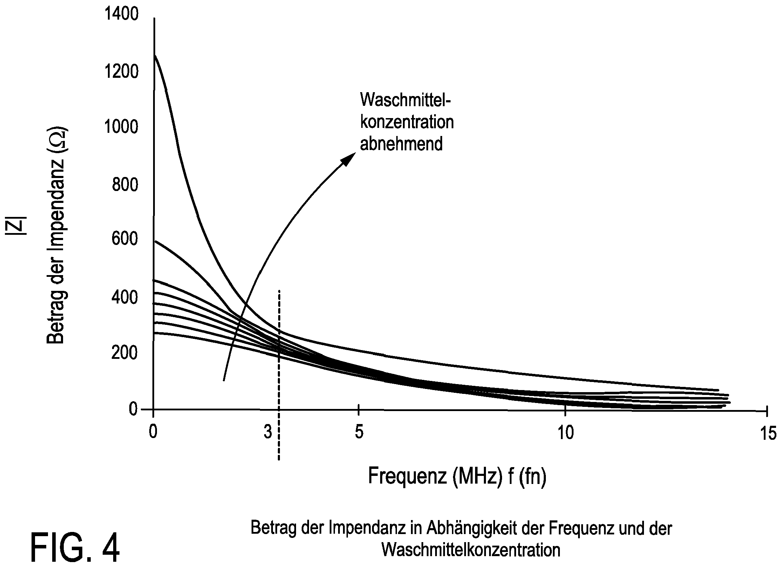

Die Grundmenge kann beispielsweise bestimmt werden aus einer in Versuchen ermittelten pauschalen Waschmittelmenge für einen üblichen Dosiervorgang, wobei die pauschalisierte Menge in eine Anzahl kleiner Teilmengen aufgeteilt werden kann. Die Teilmengen können dabei jeweils die gleiche Grundmenge sein, die hinsichtlich der Menge und der gewünschten Genauigkeit bestimmt werden kann.
Es folgen ein zweiter und ein dritter Schritt des jeweiligen Erfassens eines Betrags |Z|n und eines Phasenwinkels ϕn (Phasenverschiebung) der Impedanz Z bei einer bestimmten Anzahl n von diskreten Frequenzen fn der Ansteuerungssignale, die der Sensoreinrichtung 4 zugeführt werden (n ist eine natürliche Zahl). Bei jeder der n diskreten Frequenzen fn, die in einem Bereich zwischen 10 Hz und 15 MHz, vorzugsweise in einem Bereich von 20 kHz und 150 kHz liegen, erfolgt die Messung der Impedanz Z als eine komplexe Größe. |Z|n stellt somit den bei einer bestimmten Frequenz fn gemessenen Betrag |Z| der Impedanz Z dar, und ϕn den zu dieser diskreten Frequenz erfassten Phasenwinkel. Mit den n Frequenzen fn und damit n Messungen kann eine entsprechende Kennlinie gebildet werden. Beispiele derartiger Kennlinien sind in Fig. 4 gezeigt. Die senkrechte Achse bezeichnet den Betrag |Z| der Impedanz Z (in Ohm), und die waagrechte Achse bezeichnet die Frequenz f in MHz. Der Parameter für die verschiedenen Kennlinien ist die jeweilige Waschmittelkonzentration (Tensidkonzentration) in der Waschlauge, die stufenweise erhöht wird. Dies wird nachstehend noch im Einzelnen beschrieben. Aus den Messwerten (in Verbindung mit jedem einzelnen Messwert und einer sich aus den mehreren Messwerten ergebenden Kennlinie) wird die aktuelle Steigung mn = ϕn /fn ermittelt.
In einem nachfolgenden vierten Schritt werden aus den jeweils für eine bestimmte diskrete Frequenz fn bestimmten Messwerten des Betrags |Z|n der Impedanz Z und der Steigung mn für die Vielzahl der Messwerte der verschiedenen n Frequenzen fn entsprechende Mittelwerte ma und |Z|a berechnet.
Somit liegen entsprechend dem vorstehend beschriebenen Grundverfahren mit den ersten bis vierten Schritten zu Beginn eines Waschvorgangs in dem Laugenbehälter 10 der Wascheinrichtung 9 Verhältnisse vor, bei denen eine erste Teilmenge des Waschmittels dem Frischwasser zugegeführt wurde und eine Messreihe bei verschiedenen Frequenzen durch entsprechendes Ansteuern der Sensoreinrichtung 4 durchgeführt wurde. Es liegt einerseits eine Mehrzahl n von jeweiligen Messwerten zu den diskreten Frequenzen fn der Impedanz Z vor und es werden daraus jeweilige Messwerte mn der Steigung gebildet. Danach werden aus den Beträgen der Impedanz |Z|n und den erfassten Steigungen mn die jeweiligen Mittelwerte ma und |Z|a gebildet. Die berechneten Mittelwerte ma und |Z|a dienen als Grundlage für die Weiterführung des Verfahrens gemäß zweier nachstehend beschriebener Alternativen.

Aufbauend auf dem vorstehend beschriebenen Grund- oder Basisverfahren wird nachstehend als ein erstes Endverfahren das Endverfahren A beschrieben, das auch als Quotientenverfahren bezeichnet werden kann und im Ergebnis zu dem Bestimmungsquotienten MBQ führt. Das erste Endverfahren folgt mit dem nächsten Schritt unmittelbar dem letzten (vierten) Schritt des Grundverfahrens, so dass das gesamte Verfahren zur Bestimmung der Mizellbildungskonzentration aus dem vorstehend beschriebenen und die vier Schritte umfassenden Grundverfahren und einem der alternativen Endverfahren besteht.

In einem fünften Schritt (dem ersten Schritt 5A des ersten Endverfahrens) wird aus dem Mittelwert ma der Steigung und dem Mittelwert |Z|a des Betrags der Impedanz Z der Bestimmungsquotient MBQ = ma / |Z|a gebildet. In einem nachfolgenden sechsten Schritt (6A) wird der Bestimmungsquotient MBQ mit einem Grenzwert oder Schwellenwert XA verglichen, der zuvor experimentell bestimmt wurde und der kennzeichnend ist für zu erwartende Verhältnisse bei einem vorbestimmten Prozessablauf, hier beispielsweise bei dem vorliegenden Dosier- bzw. Waschvorgang. Erreicht der Wert des Bestimmungsquotienten MBQ (unter Berücksichtigung von Toleranzen) den Schwellenwert XA, und gilt somit MBQ = XA, wird der Dosiervorgang abgebrochen und es kann der restliche Teil des Waschvorgangs fortgesetzt werden.

Ist demgegenüber der Schwellenwert XA noch nicht erreicht und gilt MBQ < XA, dann erfolgt gemäß einem siebten Schritt ein erneuter Übergang zu dem Grundverfahren. Im Einzelnen wird gemäß dem ersten Schritt des Grundverfahrens eine weitere kleine Waschmittelmenge, d. h. die zweiten vorbestimmte Teilmenge (beispielsweise eine erneute Grundmenge) der bereits bestehenden Lauge hinzugefügt, und es wird gemäß dem weiteren Schritt 2 mit einer vorbestimmten Anzahl n diskreter Frequenzen fn Betrag |Z| und Phasenwinkel ϕ der Impedanz Z bestimmt. Danach folgt entsprechend dem Grundverfahren in dem nachfolgenden Schritt 3 die Bestimmung der aktuellen Steigung mn sowie danach die Bestimmung der jeweiligen Mittelwerte des Betrags der Impedanz Z und der Steigung mn (Schritt 4), so dass sich Mittelwerte ma und |Z|a in Verbindung mit der hinsichtlich der Waschmittelkonzentration geänderten Waschlauge ergeben. Danach wird erneut das Endverfahren A (Quotientenverfahren) mit den Schritten 5A, 6A und 7 durchgeführt.

Das gesamte Verfahren (Grundverfahren und erstes Endverfahren) wird in der vorstehend beschriebenen Weise gemäß dem siebten Schritt solange durchgeführt, bis das Ergebnis des Quotientenverfahrens ergibt, dass der Bestimmungsquotient MBQ (mit Toleranzen etwa) gleich dem ersten Schwellenwert XA ist. Es wird dann der Dosiervorgang als anfänglicher Teil des Waschvorgangs beendet, da die erforderliche Menge an Waschmittel im Verlauf des Dosiervorgangs hinzugefügt wurde.

Hinsichtlich des zweiten Endverfahrens B, das als Produktverfahren bezeichnet werden kann, werden die Schritte 1 bis 4 des Grund- oder Basisverfahrens in gleicher Weise wie beim ersten Verfahren (Verfahren A, Quotientenverfahren) durchgeführt. Im Ergebnis des zugehörigen Grundverfahrens liegen die jeweiligen Mittelwerte ma und |Z|a vor. Ausgehend hiervon wird in einem fünften Schritt (5B) gemäß dem Endverfahren B als Ergebnis der Wert eines Bestimmungsprodukts MBP bestimmt gemäß MBP = ma · |Z|a.

In einem nachfolgenden sechsten Schritt 6B wird das Bestimmungsprodukt MBP mit einem entsprechenden Grenzwert oder zweiten Schwellenwert XB verglichen. Der zweiten Schwellenwert XB kann ebenfalls experimentell bestimmt werden und ist bezeichnend für einen derartigen optimierten Waschvorgang unter den gegebenen Bedingungen.

Ergibt der Vergleich des im fünften Schritt (5B) unter den gegebenen Bedingungen der Waschlauge (vorliegende Konzentration) ermittelten Bestimmungsprodukts MBP mit dem zweiten Schwellenwert XB in dem nachfolgenden sechsten Schritt 6B, dass beide Werte (unter Berücksichtigung von Toleranzen) gleich sind und somit gilt MBP = XB, kann der Dosiervorgang beendet werden, und es kann anschließende der weitere Waschvorgang fortgesetzt werden.

Ist demgegenüber der zweiten Schwellenwert XB durch das Bestimmungsprodukt MBP noch nicht erreicht und gilt somit MBP < XB, beginnt gemäß einem nachfolgenden siebten Schritt das gesamte Verfahren wieder mit dem ersten Schritt des Grundverfahrens, indem der Waschlauge, der in dem ersten Schritt eine kleine Waschmittelmenge, beispielsweise eine vorbestimmte Grundmenge zugeführt wurde, eine zweite Teilmenge zugeführt wird. Danach werden die weiteren Schritte 2 bis 4 des Grundverfahrens mit der neuen erhöhten Konzentration an Waschmittel (Tenside) durchgeführt, und anschließend folgen mit dieser erhöhten Konzentration die weiteren Schritte 5B, 6B und 7 des zweiten Endverfahrens (B).

Die gesamten Schritte des Grundverfahrens und des zweiten Endverfahrens B werden solange durchgeführt, bis sich in Schritt 6B die Bedingung ergibt, dass das Bestimmungsprodukt MBP (unter Berücksichtigung von Toleranzen) gleich dem zweiten Schwellenwert XB ist (MBP = XB). Es kann dann der Dosiervorgang beendet werden, wonach der restliche Teil des Waschvorgangs fortgesetzt wird.

Mit jedem Durchlaufen des Grundverfahrens (Schritte 1 bis 4) wird eine weitere kleine Waschmittelmenge, d. h. eine weitere Teilmenge wie beispielsweise eine Grundmenge der Waschlauge hinzugefügt. Mit jeder neuen Konzentration werden die entsprechenden Messungen in Schritt 2 hinsichtlich Betrag und Phasenwinkel der Impedanz für eine Anzahl n von Frequenzen fn durchgeführt (n ist eine natürliche Zahl), so dass sich aus jedem Durchlaufen des Grundverfahrens eine Einzelkennlinie gemäß Fig. 4 ergibt. Die Kennlinie wird aus der Anzahl n der jeweiligen Messwerte gebildet. Wird bis zum Erreichen der Bedingung MBP = XB das gesamte Verfahren einschließlich des Grundverfahrens mit den Schritten 1 bis 4 durchgeführt, ergeben sich mit jedem erneuten Durchlauf weitere Kennlinien, wie sie in Fig. 4 gezeigt sind, wobei für die verschiedenen Kennlinien die verschiedenen Konzentrationen des Waschmittels in der Waschlauge den Parameter darstellen. Hinsichtlich der zugeführten Waschmittelmenge wird eine kleine Waschmittelmenge als angemessene Grundmenge dimensioniert und entsprechend bei jedem Durchlaufen des Grundverfahrens zugeführt. Da mit jedem Durchlaufen des Grundverfahrens die nächste erforderliche Teil- oder Grundmenge an Waschmittel hinzugefügt wird, ergibt sich bei dem mehrfachen vollständigen Durchlaufen des gesamten Verfahrens die Vielzahl der Kennlinien gemäß Fig. 4 (Anzahl der Kennlinien gemäß Fig. 4 entsprechend der Häufigkeit des Durchlaufens des vollständigen Verfahrens).

Es ist nicht erforderlich, dass eine im Rahmen eines Waschvorgangs in konventionellen Verfahren pauschalisierte und im Allgemeinen hoch dimensionierte (beispielsweise geschätzte) Waschmittelmenge zugegeben wird. Sollte in einem der Schritte 5A und 5B oder 6A und 6B das Erreichen oder geringfügige Überschreiten des jeweiligen Schwellenwerts XA oder XB erkannt werden, so ist damit die kritische Konzentration der Mizellen erreicht und messtechnisch erfasst, so dass die für ein optimales Waschergebnis geringste Waschmittelmenge erreicht ist. Es kann der Dosiervorgang ohne weitere Zugabe einer ergänzenden Waschmittelmenge (d. h. ohne ein erneutes Durchlaufen des Grundverfahrens und damit ohne eine weitere Teilmenge an Waschmittel) in der Entscheidung in dem jeweiligen Schritt 7 beendet werden. Es folgen dann der restliche Teil des Waschvorgangs und die anschließenden Spülvorgänge.

Im Ergebnis kann somit die Anwendung des erfindungsgemäßen Verfahrens bewirken, dass in Verbindung mit realen Bedingungen eine Regelung des Zuführens der Waschmittelmenge durchgeführt wird, so dass beispielsweise im Fall einer geringeren Verschmutzung des Waschguts der jeweilige Schwellenwert XA oder XB durch die ermittelten Werte MBQ (Bestimmungsquotient) oder MBP (Bestimmungsprodukt) früher (d. h. bei einer geringeren Waschmittelmenge) erreicht wird. Die vorliegende Erfindung kann somit zu einem sowohl ökonomisch als auch ökologisch günstigeren Waschvorgang führen.

In der vorstehend beschriebenen Fig. 4 wurde der Betrag |Z| der erfassten Impedanz Z für eine Mehrzahl diskreter Frequenzen fn in Form von Kennlinien zur Veranschaulichung des Ergebnisses des zweiten Schritts des Grundverfahrens gezeigt. Parameter für die einzelnen Kennlinien ist die Waschmittelkonzentration, wobei in der Darstellung der Fig. 4 die Waschmittelkonzentration von unten nach oben abnimmt.

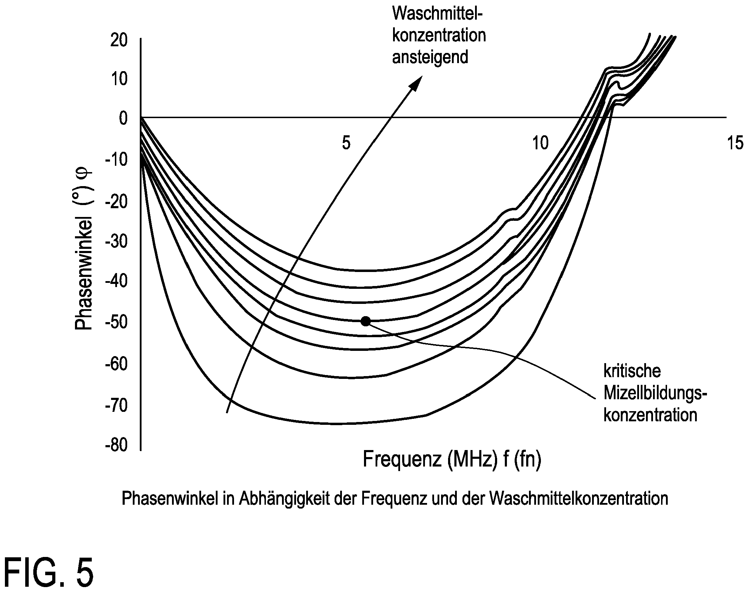

In gleichartiger Weise zeigt Fig. 5 die gewonnenen Kennlinien des Phasenwinkels ϕn der Impedanz Z in Abhängigkeit von den jeweiligen diskreten Frequenzen fn in Form von Kennlinien. Auch hier ist in gleicher Weise wie in Fig. 4 die stufenweise in Verbindung mit dem Grundverfahren geänderte Waschmittelmenge (Tensidmenge) der Parameter für die unterschiedlichen Kennlinien. In der Darstellung von Fig. 5 ist die Waschmittelkonzentration von unten nach oben ansteigend.

In Fig. 5 stellt die mit "kritische Mizellbildungskonzentration" bezeichnete Kennlinie diejenige dar, bei der die jeweiligen Ergebnisse (MBQ und/oder MBP) der Endverfahren A oder B etwa gleich dem zugehörigen ersten oder zweiten Schwellenwert XA oder XB sind, so dass mit dem Erreichen dieser Kennlinien der Dosiervorgang in einem Betrieb der Wascheinrichtung 9 (z. B. bei der Anwendung in einem privaten Haushalt) beendet wird. Die weiter angegebenen Kennlinien sind lediglich zu Versuchszwecken ermittelt worden und zeigen eine über die kritische Mizellbildungskonzentration hinausgehende Dosierung des Waschmittels, die nicht mehr für ein optimales Waschergebnis erforderlich ist. In der tatsächlichen Anwendung wird das erfindungsgemäße Verfahren den Dosiervorgang bei Erreichen der Kennlinie der kritischen Mizellbildungskonzentration auf der Basis der ermittelten Werte des Bestimmungsquotienten MBQ oder des Bestimmungsprodukts MBP (Schritte 6A und 7 oder 6B und 7) beenden und einen unnötigen Waschmittelverbrauch mit gleichzeitig ökonomischen und ökologischen Vorteilen wirksam verhindern.

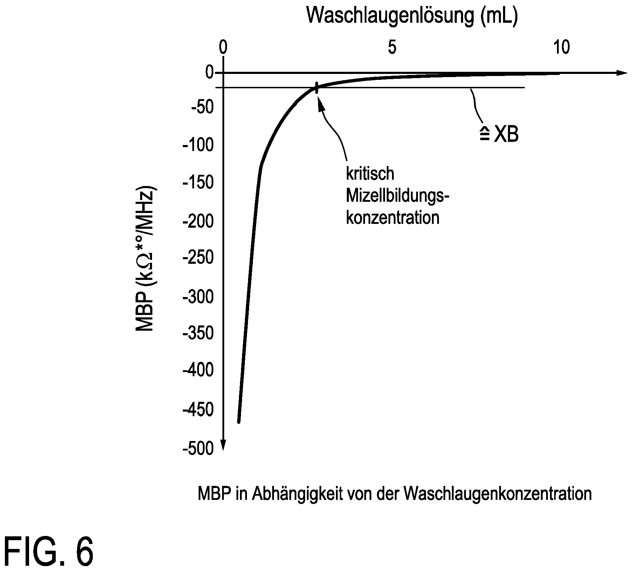

Fig. 6 zeigt eine Kennlinie für die Auswertung des Bestimmungsprodukts MBP für die Mizellen gemäß dem (zweiten) Endverfahren B, wobei das Bestimmungsprodukt MBP aus den Mittelwerten des Betrags der Impedanz |1Z|a und der Steigung ma für alle Arten von Waschmitteln mit unterschiedlicher Zusammensetzung verwendet werden kann. Es kann das Endverfahren B in Verbindung mit dem Bestimmungsprodukt MBP vorzugsweise für Fein- und Spezialwaschmittel verwendet werden. Das erste Endverfahren A in Verbindung mit dem Quotientenverfahren MBQ dient in erster Linie zur Verwendung bei Standard-Waschmitteln.

Im Einzelnen zeigt Fig. 6 das Ergebnis des (zweiten) Endverfahrens B mit der Bildung des Bestimmungsprodukts MBP = ma · |Z|a. Die senkrechte Achse in Fig. 6 zeigt das Bestimmungsprodukt MBP, während die horizontale Achse den Zusammenhang zu einer Waschlaugenkonzentration (Waschmittelmenge in der Waschlauge) zeigt. Eine zur horizontalen Achse parallele Linie gibt schematisch den Grenzwert oder zweiten Schwellenwert XB an. In dem Schnittpunkt der parallelen Linie mit der Kennlinie in Fig. 6 ist die optimale (d. h. die für ein optimales Waschergebnis geringste) Waschmittelmenge erreicht, die durch das Erkennen der kritischen Mizellbildungskonzentration bestimmt wird. Danach wird der Dosiervorgang beendet. Der weitere Verlauf der Kennlinie zeigt im Versuchsbetrieb zur Vervollständigung des Verlaufs der Kennlinie erreichte höhere Konzentrationen von Waschmittel, ohne dass ein verbessertes Waschergebnis erreicht werden kann.

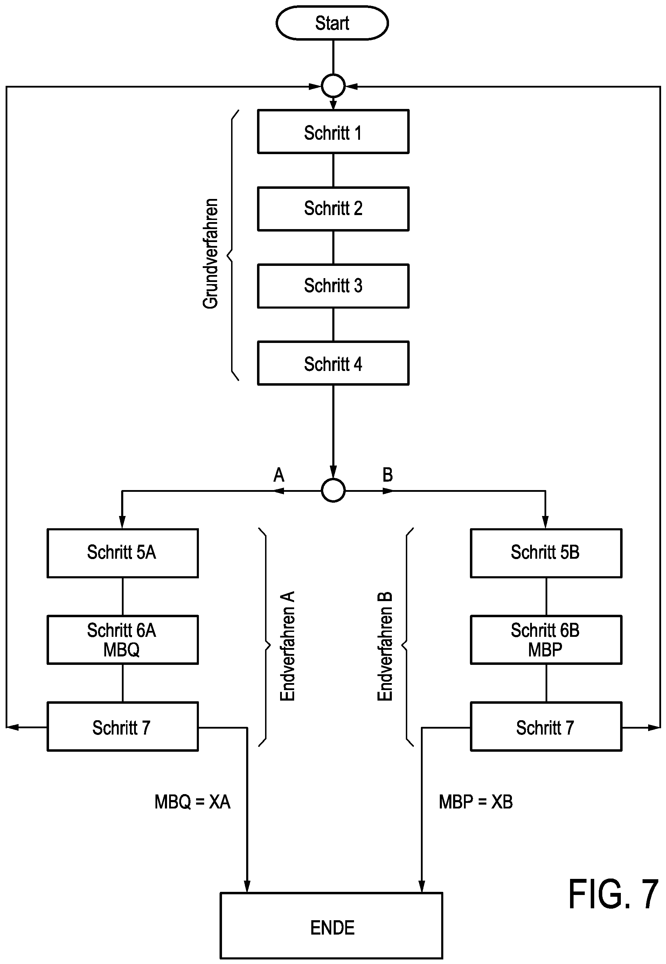

Figur 7 zeigt eine Übersicht über die Schritte des Grundverfahrens sowie der beiden alternativen Endverfahren A und B. Nach dem letzten (vierten) Schritt des Grundverfahrens kann das gesamte Verfahren alternativ mit dem ersten oder zweiten Endverfahren (A, B) weitergeführt werden, da beide Endverfahren auf denselben Ausgangsdaten des Grundverfahrens aufbauen. Es können mit diesen Ausgangsdaten des Grundverfahrens auch beide Endverfahren A und B gleichzeitig angewendet werden zur Gewinnung umfangreicher Erfassungsdaten. In diesem Fall ist einem der Endverfahren A oder B ein Vorrang zu geben im Hinblick auf die Kriterien und Bedingungen in dem sechsten und siebten Schritt, ob ein Rücksprung zu dem ersten Schritt des Grundverfahrens erfolgen soll.

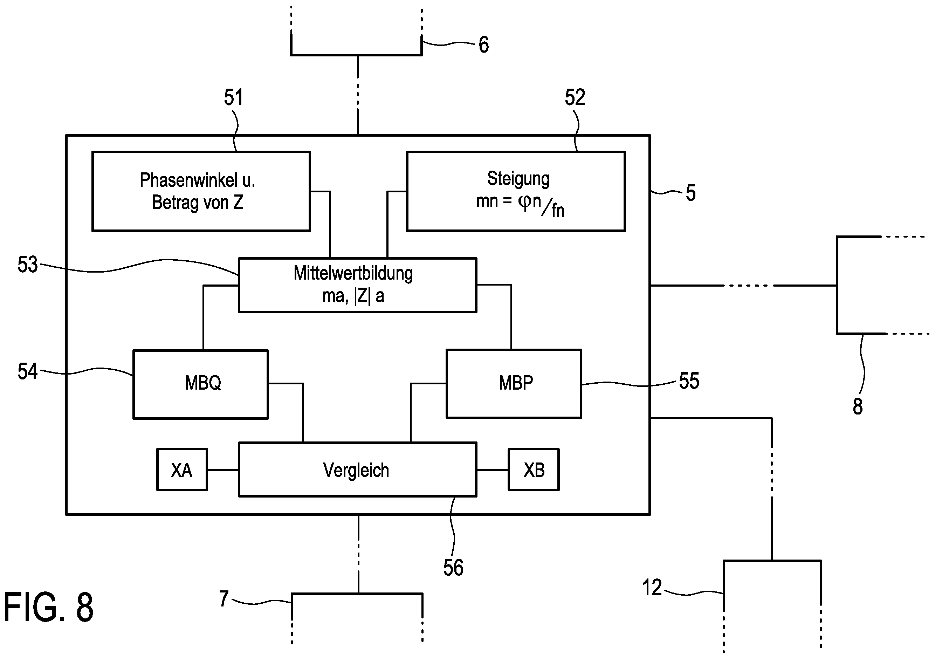

In Verbindung mit der Darstellung in den Figuren 1 und 2 wurde in grundlegender Weise die Vorrichtung 1 zur Durchführung des erfindungsgemäßen Verfahrens beschrieben. Fig. 8 zeigt in ergänzender Weise in schematischer Darstellung die weiteren Komponenten im Zusammenhang mit der Durchführung des Verfahrens. In dem Block der Steuerungseinrichtung 5 sind lediglich zur Vereinfachung der Darstellung die speziell zur Durchführung des Verfahrens relevanten Komponenten dargestellt.

Die Steuerungseinrichtung 5 umfasst eine Einrichtung 51 zur Bestimmung des Betrags |Z| und des Phasenwinkels ϕ der Impedanz Z. Eine zweite Einrichtung 52 ist vorgesehen zur Bestimmung der Steigung mn aus dem Phasenwinkel ϕn und der Frequenz fn in Verbindung mit einer Mehrzahl von Erfassungen (Messungen) bei den diskreten Frequenzen fn.

Die erste Einrichtung 51 dient zur Durchführung des zweiten Schritts des Grundverfahrens und die zweite Einrichtung 52 dient zur Durchführung des dritten Schritts des Grundverfahrens.

Es ist ferner eine dritte Einrichtung 53 vorgesehen, die zur Mittelwertbildung aus den Werten der Steigung mn und des Betrags der Impedanz Z dient. Entsprechend einer vierten Einrichtung 54 wird gemäß dem ersten Endverfahren A, d.h. dem Quotientenverfahren, der Bestimmungsquotient MBQ unter Bildung des Quotienten aus den zuvor bestimmten Mittelwerten bestimmt. Mittels einer fünften Einrichtung 55 wird in Verbindung mit der Anwendung des zweiten Verfahrens B das Bestimmungsprodukt MBP aus den jeweiligen Mittelwerten bestimmt. Eine Vergleichseinrichtung 56 ist vorgesehen zur Durchführung eines Vergleichs des jeweiligen Bestimmungsprodukts MBP oder Bestimmungsquotienten MBQ mit den entsprechenden Schwellenwert XA oder XB und Bestimmen, ob das gesamte Verfahren nochmals zu durchlaufen ist. Das gesamte Verfahren wird nochmals durchlaufen, wenn das Bestimmungsprodukt MBP oder der Bestimmungsquotient MBQ noch nicht den jeweiligen Schwellenwert XA oder XB erreicht hat.

Die Gesamtsteuerung des Ablaufs wird durch die Steuerungseinrichtung 5 durchgeführt, die weitere Komponenten zur Gesamtsteuerung aufweist, die jedoch zur Vereinfachung der Darstellung in Fig. 8 nicht gezeigt sind. Mit diesen Komponenten ist auch nach Beendigung des Dosiervorgangs während des restlichen Waschvorgangs die Durchführung von Messungen möglich, wobei lediglich prozessbegleitende Daten gebildet werden.

Mit der Bestimmung in Schritt 2 des Grundverfahrens wird eine jeweilige Kennlinie in den Figuren 4 und 5 gebildet. Hierbei wird eine Mehrzahl von diskreten Frequenzen fn für eine entsprechende Anzahl n von Messungen oder Erfassungen verwendet. Die Mehrzahl der diskreten Frequenzen fn umfasst die vorbestimmte Anzahl n Frequenzen (n ist eine natürliche Zahl), wobei diese beispielsweise zwischen 5 und 20 diskreten Frequenzen liegen kann. Es soll die vorbestimmte Anzahl von n diskreten Frequenzen in dem genannten Bereich derart festgelegt werden, dass eine Mittelwertbildung der jeweiligen Messwerte für die Steigung mn und für den Betrag der Impedanz Z sinnvoll ist und eine aussagekräftige Kennlinie gebildet werden kann. Es können beispielsweise auch 10 bis 12 diskrete Frequenzen vorgesehen sein, so dass eine jeweilige Kennlinie gemäß den Figuren 4 und 5 gebildet werden kann. Die vorliegende Erfindung ist nicht auf die vorstehend angegebene Anzahl n von diskreten Frequenzen festgelegt. Die Anzahl n kann in Verbindung mit verschiedenen Waschprogrammen oder weiteren Bedingungen unterschiedlich sein.

Wird das Grundverfahren durchgeführt, kann hinsichtlich des Zuführens einer weiteren kleinen Waschmittelmenge (Teilmenge, beispielsweise vorbestimmte Grundmenge) der Benutzer aufgefordert werden, die entsprechend bemessene Teilmenge in die Waschlauge zu geben (teil-automatisiertes Verfahren). Dies betrifft sowohl pulverförmige als auch flüssige Waschmittel.

Im Sinne eines vollständig automatisierten Verfahrens umfasst die Wascheinrichtung 9 die Zuführungseinrichtung 12 für Waschmittel, die in der Weise ausgebildet ist, dass vorbestimmte Waschmittelmengen entsprechend einer Steuerung durch die Steuerungseinrichtung 5 und/oder Steuereinheit 7 zum richtigen Zeitpunkt, d.h. jeweils zu Beginn einer Durchführung des Grundverfahrens, der Waschlauge zugeführt wird. Zu diesem Zweck ist die Zuführungseinrichtung 12 mit der Steuerungseinrichtung 5 verbunden und gibt zu Beginn der Durchführung des Grundverfahrens in Verbindung mit dem Schritt 1 die jeweils bemessene Teilmenge hinzu. Fig. 2 zeigt in diesem Zusammenhang die Anordnung der Zuführungseinrichtung 12, wobei die Möglichkeit besteht, dass lediglich die Steuerungseinrichtung 5 die Zuführungseinrichtung 12 zum Zuführen einer entsprechenden Waschmittelmenge anweist. Es kann auch die Zuführungseinrichtung 12 die allgemeine Waschmittelzuführungseinrichtung der Wascheinrichtung 9 sein, so dass diese auch oder lediglich durch die Steuereinheit 7 angesteuert werden kann. Hat lediglich die Steuereinheit 7 einen Zugriff auf die Zuführungseinrichtung 12, erfolgt die Anweisung der Steuerungseinrichtung 5 an die Steuereinheit 7, um gemäß Schritt 1 des Grundverfahrens die Zuführung einer entsprechenden (ergänzenden) Waschmittelmenge zu veranlassen. Die Zuführungseinrichtung 12 weist die entsprechenden technischen Einrichtungen aus zur Handhabung von festen (pulverförmigen) und/oder flüssigen Waschmitteln auf.

Die vorliegende Erfindung wurde vorstehend in Verbindung mit Ausführungsbeispielen des Verfahrens und der Vorrichtung zur Bestimmung eine Mizellbildungskonzentration beschrieben. Für den auf diesem Gebiet tätigen Fachmann ist es jedoch selbstverständlich, dass die Ausgestaltung der vorliegenden Erfindung gemäß den beschriebenen Figuren und den für die jeweiligen Bauteile und Komponenten verwendeten Bezugszeichen in den Figuren und der Beschreibung sowie die beispielhaften Angaben nicht einschränkend auszulegen sind. Die Erfindung ist auf die angegebene Darstellung in den Figuren und insbesondere auf Dimensionen und auf Anordnungen sowie Formen der Komponenten nicht beschränkt. Als zur Erfindung gehörig werden sämtliche Ausführungsformen und Varianten angesehen, die unter die beigefügten Patentansprüche fallen.

## Patentansprüche

1. Verfahren zur Bestimmung einer Mizellbildungskonzentration, wobei das Verfahren in einer Wascheinrichtung (9) durchgeführt wird, und die Wascheinrichtung eine zur Durchführung eines Waschvorgangs erforderliche Wassermenge aufweist, mit den Schritten:
- Zuführen einer Teilmenge eines Waschmittels zu der Wassermenge zur Bildung einer Waschlauge (3) (Schritt 1),
- Erfassen eines Betrags (|Z|) und eines Phasenwinkels (ϕ) einer Impedanz (Z) der Waschlauge für eine vorbestimmte Anzahl (n) von Frequenzen (fn) von Ansteuerungssignalen und Erzeugen einer entsprechenden Anzahl jeweiliger Messwerte (Schritt 2),
- Ermitteln einer Steigung (mn) aus jedem Messwert des Phasenwinkels (ϕn) und der jeweiligen Frequenz (f(n)) (Schritt 3),
- Berechnen eines jeweiligen Mittelwerts (ma, |Z|a) aus der Anzahl der Steigungen (mn) und den Beträgen der Impedanz (|Z|n) (Schritt 4),
- Ermitteln eines Bestimmungsprodukts (MBP) aus dem Mittelwert (ma) der Steigungen (mn) und dem Mittelwert (|Z|a) der Beträge (|Z|n) der Impedanzen (Z) (Schritt 5B),
- Vergleichen des Bestimmungsprodukts (MBP) mit einem vorbestimmten Schwellenwert (XB) (Schritt 6B), und
- Wiederholen der Schritte 1 bis 6B, bis das Bestimmungsprodukt (MBP) gleich oder größer als der Schwellenwert (XB) ist (Schritt 7).

2. Verfahren zur Bestimmung einer Mizellbildungskonzentration, wobei das Verfahren in einer Wascheinrichtung (9) durchgeführt wird, und die Wascheinrichtung eine zur Durchführung eines Waschvorgangs erforderliche Wassermenge aufweist, mit den Schritten:
- Zuführen einer Teilmenge eines Waschmittels zu der Wassermenge zur Bildung einer Waschlauge (3) (Schritt 1),
- Erfassen eines Betrags (|Z|) und eines Phasenwinkels (ϕ) einer Impedanz (Z) der Waschlauge für eine vorbestimmte Anzahl (n) von Frequenzen (fn) von Ansteuerungssignalen und Erzeugen einer entsprechenden Anzahl jeweiliger Messwerte (Schritt 2),
- Ermitteln einer Steigung (mn) aus jedem Messwert des Phasenwinkels (ϕn) und der jeweiligen Frequenz (f(n)) (Schritt 3),
- Berechnen eines jeweiligen Mittelwerts (ma, |Z|a) aus der Anzahl der Steigungen (mn) und den Beträgen der Impedanz (|Z|n) (Schritt 4),
- Ermitteln eines Bestimmungsquotienten (MBQ) aus dem Mittelwert (ma) der Steigungen und dem Mittelwert (|Z|a) der Beträge (|Z|n) der Impedanzen (Z) (Schritt 5A),
- Vergleichen des Bestimmungsquotienten (MBQ) mit einem vorbestimmten Schwellenwert (XA) (Schritt 6A), und
- Wiederholen der Schritte 1 bis 6A, bis der Bestimmungsquotient (MBQ) gleich oder größer als der Schwellenwert (XA) ist (Schritt 7).

3. Verfahren nach einem der Ansprüche 1 oder 2, wobei die Teilmenge eines Waschmittels eine vorbestimmte Grundmenge eines Waschmittels entsprechend einem jeweiligen Waschvorgang ist.

4. Verfahren nach Anspruch 1 oder 2, wobei in der Wascheinrichtung (9) eine Sensoreinrichtung (4) in Kontakt mit der Waschlauge (3) vorgesehen ist und zur Durchführung der Messung gemäß Schritt 2 der Sensoreinrichtung (4) die Ansteuerungssignale zugeführt werden.

5. Verfahren nach einem der Ansprüche 1 bis 4, wobei der Schritt des Berechnens der jeweiligen Mittelwerte (ma, (|Z|a) den Schritt des Berechnens der Mittelwerte für sämtliche oder zumindest einen Teil der Anzahl (n) der Messwerte in Verbindung mit den diskreten Frequenzen (fn) umfasst.

6. Verfahren nach Anspruch 1 oder 2, wobei die Schwellenwerte (XA, XB) experimentell und individuell im Zusammenhang mit einem jeweiligen Waschvorgang bestimmt werden.

7. Verfahren nach Anspruch 4, wobei mittels der Sensoreinrichtung (4) die Impedanz (Z) und der Phasenwinkel (ϕ) für die diskreten Frequenzen (fn) und in Abhängigkeit von der zugeführten Teilmenge des Waschmittels bestimmt werden.

8. Vorrichtung zur Durchführung des Verfahrens zur Bestimmung einer Mizellbildungskonzentration in einer Wascheinrichtung (9), wobei eine Sensoreinrichtung (4) in einem Laugenbehälter (10) in Kontakt mit einer Waschlauge (3) angeordnet ist, der Sensoreinrichtung (4) mittels einer Steuerungseinrichtung (5) Ansteuerungssignale zugeführt werden und der Laugenbehälter (10) eine zur Durchführung eines Waschvorgangs erforderliche Wassermenge aufweist, wobei die Vorrichtung (1) des Weiteren umfasst:
- eine Zuführungseinrichtung (12) zum Zuführen einer vorbestimmten Menge eines Waschmittels in den Laugenbehälter (10) zur Bildung der Waschlauge (3),
- eine erste Einrichtung (51) zur Erfassung eines Betrags (|Z|) und eines Phasenwinkels (ϕ) einer Impedanz (Z) der Waschlauge (3) für eine vorbestimmte Anzahl (n) von Frequenzen (fn) der Ansteuerungssignale und Erzeugen einer entsprechenden Anzahl von Messwerten,
- einer zweiten Einrichtung (52) zur Ermittlung einer Steigung (mn) aus jedem Messwert des Phasenwinkels (ϕn) und der jeweiligen Frequenz (f(n)),
- einer dritten Einrichtung (53) zur Berechnung eines Mittelwerts (ma, |Z|a) aus der Anzahl der Steigungen (mn) und den Beträgen der Impedanz (|Z|n),
- einer vierten Einrichtung (54) zur Bestimmung eines Bestimmungsprodukts (MBP) aus dem Mittelwert (ma) der Steigungen und dem Mittelwert (|Z|a) der Beträge der Impedanzen (Z),
- einer fünften Einrichtung (55) zur Bestimmung eines Bestimmungsquotienten (MBQ) aus dem Mittelwert (ma) der Steigungen und dem Mittelwert (|Z|a) der Beträge der Impedanzen (Z), und
- einer Vergleichseinrichtung (56) zum Vergleichen des Bestimmungsprodukts (MBP) mit einem ersten vorbestimmten Schwellenwert (XB) oder Vergleichen des Bestimmungsquotienten (MBQ) mit einem zweiten vorbestimmten Schwellenwert (XA) zur Ermittlung, ob der Wert des Bestimmungsprodukts (MBP) oder des Bestimmungsquotienten (MBQ) gleich oder größer als der jeweilige Schwellenwert (XB, XA) ist.

## Claims

1. Method for determining a micelle formation concentration, wherein the method is carried out in a washing device (9) and the washing device contains an amount of water required for carrying out a washing operation, which method comprises the following steps:
- delivering a partial amount of a washing agent to the amount of water to form a washing liquor (3) (step 1),
- detecting a magnitude (|Z|) and a phase angle (ϕ) of an impedance (Z) of the washing liquor for a predetermined number (n) of frequencies (fn) of actuation signals and generating a corresponding number of respective measured values (step 2),
- determining a gradient (mn) from each measured value of the phase angle (ϕn) and the respective frequency (f(n)) (step 3),
- calculating a respective mean value (ma, |Z|a) from the number of gradients (mn) and the magnitudes of the impedance (|Z|n) (step 4),
- determining a determination product (MBP) from the mean value (ma) of the gradients (mn) and the mean value (|Z|a) of the magnitudes (|Z|n) of the impedances (Z) (step 5B),
- comparing the determination product (MBP) with a predetermined threshold value (XB) (step 6B), and
- repeating steps 1 to 6B until the determination product (MBP) is equal to or greater than the threshold value (XB) (step 7).

2. Method for determining a micelle formation concentration, wherein the method is carried out in a washing device (9) and the washing device contains an amount of water required for carrying out a washing operation, which method comprises the following steps:
- delivering a partial amount of a washing agent to the amount of water to form a washing liquor (3) (step 1),
- detecting a magnitude (|Z|) and a phase angle (ϕ) of an impedance (Z) of the washing liquor for a predetermined number (n) of frequencies (fn) of actuation signals and generating a corresponding number of respective measured values (step 2),
- determining a gradient (mn) from each measured value of the phase angle (ϕn) and the respective frequency (f(n)) (step 3),
- calculating a respective mean value (ma, |Z|a) from the number of gradients (mn) and the magnitudes of the impedance (|Z|n) (step 4),
- determining a determination quotient (MBQ) from the mean value (ma) of the gradients and the mean value (|Z|a) of the magnitudes (|Z|n) of the impedances (Z) (step 5A),
- comparing the determination quotient (MBQ) with a predetermined threshold value (XA) (step 6A), and
- repeating steps 1 to 6A until the determination quotient (MBQ) is equal to or greater than the threshold value (XA) (step 7).

3. Method according to either claim 1 or claim 2, wherein the partial amount of a washing agent is a predetermined basic amount of a washing agent corresponding to a respective washing operation.

4. Method according to claim 1 or 2, wherein a sensor device (4) in contact with the washing liquor (3) is provided in the washing device (9), and the actuation signals are fed to the sensor device (4) in order to carry out the measurement according to step 2.

5. Method according to any one of claims 1 to 4, wherein the step of calculating the respective mean values (ma, |Z|a) includes the step of calculating the mean values for all or at least some of the number (n) of measured values associated with the discrete frequencies (fn).

6. Method according to claim 1 or 2, wherein the threshold values (XA, XB) are determined experimentally and individually in association with a respective washing operation.

7. Method according to claim 4, wherein by means of the sensor device (4) the impedance (Z) and the phase angle (ϕ) are determined for the discrete frequencies (fn) and in dependence on the delivered partial amount of the washing agent.

8. Device for carrying out the method for determining a micelle formation concentration in a washing device (9), wherein a sensor device (4) is arranged in a liquor container (10) in contact with a washing liquor (3), actuating signals are fed to the sensor device (4) by means of a control device (5), and the liquor container (10) contains an amount of water required for carrying out a washing operation, wherein the device (1) further comprises:
- a delivery device (12) for delivering a predetermined amount of a washing agent into the liquor container (10) to form the washing liquor (3),
- a first device (51) for detecting a magnitude (|Z|) and a phase angle (ϕ) of an impedance (Z) of the washing liquor (3) for a predetermined number (n) of frequencies (fn) of the actuation signals and generating a corresponding number of measured values,
- a second device (52) for determining a gradient (mn) from each measured value of the phase angle (ϕn) and the respective frequency (f(n)),
- a third device (53) for calculating a mean value (ma, |Z|a) from the number of gradients (mn) and the magnitudes of the impedance (|Z|n),
- a fourth device (54) for determining a determination product (MBP) from the mean value (ma) of the gradients and the mean value (|Z|a) of the magnitudes of the impedances (Z),
- a fifth device (55) for determining a determination quotient (MBQ) from the mean value (ma) of the gradients and the mean value (|Z|a) of the magnitudes of the impedances (Z), and
- a comparison device (56) for comparing the determination product (MBP) with a first predetermined threshold value (XB) or comparing the determination quotient (MBQ) with a second predetermined threshold value (XA) in order to determine whether the value of the determination product (MBP) or of the determination quotient (MBQ) is equal to or greater than the respective threshold value (XB, XA).

## Revendications

1. Procédé servant à déterminer une concentration de micelles formées, dans lequel le procédé est mis en oeuvre dans un système de lavage (9) et le système de lavage présente une quantité d'eau requise aux fins de la mise en oeuvre d'une opération de lavage, comprenant les étapes consistant à :
- amener une quantité partielle d'un agent de lavage à la quantité d'eau afin de former une lessive de lavage (3) (étape 1),
- détecter un montant (|Z|) et un angle de phase (ϕ) d'une impédance (Z) de la lessive de lavage pour un nombre (n) prédéfini de fréquences (fn) de signaux de pilotage et générer un nombre correspondant de valeurs de mesure respectives (étape 2),
- déterminer une hausse (mn) à partir de chaque valeur de mesure de l'angle de phase (ϕn) et de la fréquence (f(n)) respective (étape 3),
- calculer une valeur moyenne (ma, |Z|a) respective à partir du nombre des hausses (mn) et des montants de l'impédance (|Z|n) (étape 4),
- déterminer un produit défini (MBP) à partir de la valeur moyenne (ma) des hausses (mn) et de la valeur moyenne (|Z|a) des montants (|Z|n) des impédances (Z) (étape 5B),
- comparer le produit défini (MBP) à une valeur de seuil (XB) prédéfinie (étape 6B), et
- renouveler les étapes 1 à 6B jusqu'à ce que le produit défini (MBP) soit égal ou supérieur à la valeur de seuil (XB) (étape 7).

2. Procédé servant à définir une concentration de micelles formées, dans lequel le procédé est mis en oeuvre dans un système de lavage (9) et le système de lavage présente une quantité d'eau requise aux fins de la mise en oeuvre d'une opération de lavage, comprenant les étapes consistant à :
- amener une quantité partielle d'un agent de lavage à la quantité d'eau afin de former une lessive de lavage (3) (étape 1),
- détecter un montant (|Z|) et un angle de phase (ϕ) d'une impédance (Z) de la lessive de lavage pour un nombre (n) prédéfini de fréquences (fn) de signaux de pilotage et générer un nombre correspondant de valeurs de mesure respectives (étape 2),
- déterminer une hausse (mn) à partir de chaque valeur de mesure de l'angle de phase (ϕn) et de la fréquence (f(n)) respective (étape 3),
- calculer une valeur moyenne (ma, |Z|a) respective à partir du nombre des hausses (mn) et des montants de l'impédance (|Z|n) (étape 4),
- déterminer un quotient défini (MBQ) à partir de la valeur moyenne (ma) des hausses et de la valeur moyenne (|Z|a) des montants (|Z|n) des impédances (Z) (étape 5A),
- comparer le quotient défini (MBQ) à une valeur de seuil (XB) prédéfinie (étape 6A), et
- renouveler les étapes 1 à 6A jusqu'à ce que le quotient défini (MBQ) soit égal ou supérieur à la valeur de seuil (XA) (étape 7).

3. Procédé selon l'une quelconque des revendications 1 ou 2, dans lequel la quantité partielle d'un agent de lavage est une quantité de base prédéfinie d'un agent de lavage correspondant à une opération de lavage respective.

4. Procédé selon la revendication 1 ou 2, dans lequel est prévu dans le système de lavage (9) un système de capteur (4) en contact avec la lessive de lavage (3) et les signaux de pilotage sont amenés au système de capteur (4) aux fins de la mise en oeuvre de la mesure selon l'étape 2.

5. Procédé selon l'une quelconque des revendications 1 à 4, dans lequel l'étape du calcul des valeurs moyennes (ma, (|Z|a) respectives comprend l'étape du calcul des valeurs moyennes pour toutes ou du moins pour une partie du nombre (n) des valeurs de mesure en lien avec les fréquences (fn) discrètes.

6. Procédé selon la revendication 1 ou 2, dans lequel les valeurs de seuil (XA, XB) sont définies de manière expérimentale et individuellement en rapport avec une opération de lavage respective.

7. Procédé selon la revendication 4, dans lequel l'impédance (Z) et l'angle de phase (ϕ) sont définis pour les fréquences (fn) discrètes et en fonction de la quantité partielle amenée de l'agent de lavage au moyen du système de capteur (4).

8. Dispositif servant à mettre en oeuvre le procédé servant à définir une concentration de micelles formées dans un système de lavage (9), dans lequel un système de capteur (4) est disposé dans un contenant de lessive (10) en contact avec une lessive de lavage (3), des signaux de pilotage sont amenés au système de capteur (4) au moyen d'un système de commande (5) et le contenant de lessive (10) présente une quantité d'eau requise aux fins de la mise en oeuvre d'une opération de lavage, dans lequel le dispositif (1) comprend par ailleurs :
- un système d'amenée (12) servant à amener une quantité prédéfinie d'un agent de lavage dans le contenant de lessive (10) servant à former la lessive de lavage (3),
- un premier système (51) servant à détecter un montant (|Z|) et un angle de phase (ϕ) d'une impédance (Z) de la lessive de lavage (3) pour un nombre (n) prédéfini de fréquences (fn) des signaux de pilotage et générer un nombre correspondant de valeurs de mesure,
- un deuxième système (52) servant à déterminer une hausse (mn) à partir de chaque valeur de mesure de l'angle de phase (ϕn) et de la fréquence (f(n)) respective,
- un troisième système (53) servant à calculer une valeur moyenne (ma, |Z|a) à partir du nombre des hausses (mn) et des montants de l'impédance (|Z|n),
- un quatrième système (54) servant à définir un produit défini (MBP) à partir de la valeur moyenne (ma) des hausses et de la valeur moyenne (|Z|a) des montants des impédances (Z),
- un cinquième système (55) servant à définir un quotient défini (MBQ) à partir de la valeur moyenne (ma) des hausses et de la valeur moyenne (|Z|a) des montants des impédances (Z), et
- un système de comparaison (56) servant à comparer le produit défini (MBP) à une première valeur de seuil (XB) prédéfinie ou comparer le quotient défini (MBQ) à une deuxième valeur de seuil (XA) prédéfinie afin de déterminer si la valeur du produit défini (MBP) ou du quotient défini (MBQ) est égale ou supérieure à la valeur de seuil (XB, XA) respective.
